Europäisches Patentamt

European Patent Office

Office européen des brevets

(11) Publication number: **0 492 065 A2**

# EUROPEAN PATENT APPLICATION

(21) Application number: **91116581.9**

(22) Date of filing: **27.09.91**

(51) Int. Cl.⁵: **G06K 7/12**, G06K 7/10

(30) Priority: **24.12.90 US 632835**

(43) Date of publication of application:
**01.07.92 Bulletin 92/27**

(84) Designated Contracting States:
**AT DE ES FR GB IT**

(71) Applicant: SYMBOL TECHNOLOGIES, INC.
116 Wilbur Place
Bohemia New York 11716-3300(US)

(72) Inventor: Barkan, Edward
6 Lily Drive
Setauket, New York 11720(US)
Inventor: Metlitsky, Boris
23 Acorn Lane
Stony Brook, New York 11790(US)
Inventor: Shepard, Howard M.
18 Provost Avenue
Great Neck, New York 11720(US)

(74) Representative: Wagner, Karl H. et al
WAGNER & GEYER European Patent
Attorneys Gewürzmühlstrasse 5
W-8000 München 22(DE)

(54) **Multi-laser scanning system and method of utilization thereof.**

(57) A multi-laser scanning system utilizing at least two lasers generating laser beams at different wavelengths for the high data density scanning or reading of information, such as bar code symbols or the like. Also disclosed is a method for the scanning or reading of information, such as bar code symbols, through the intermediary of the multi-laser scanning system as disclosed herein.

## BACKGROUND OF THE INVENTION

### 1. Field of the Invention

The present relates to a multi-laser scanning system utilizing at least two lasers generating laser beams at different wavelengths for the high data density scanning or reading of information, such as bar code symbols or the like. Moreover, the invention also relates to a method for the scanning or reading of information, such as bar code symbols, through the intermediary of the multi-laser scanning system as disclosed herein.

The utilization of laser scanning devices for the scanning and reading of information provided on a target, such as a package or sale item, is well known in the technology. In this connection, various types of laser scanning devices incorporate scanning heads housing bar code readers for the reading of bar code symbols on targets which are scanned by a laser beam projected from the bar code reader. In general, such laser scanning devices; for instance, bar code readers, are widely employed in industry and retailing commerce and, for example, may be permanently incorporated in the structures of check-out counters of supermarkets, whereby the items merchandise having the bar code symbols imprinted thereon are passed over a bar code reader so as to provide a record of the merchandise being purchased by a consumer and concurrently a read out (and possibly a printed record for the consumer). The bar code reader or laser scanning device may also consist of a scanner unit fixedly mounted on a stand extending above a support platform or counter top for the merchandise; or alternatively, in many instances, may be in the form of a manually operable gun-shaped component having a pistol grip, which is passed over the bar code symbol imprinted on the sale item at some short distance therefrom so as to enable scanning of the information provided by the bar code symbol.

### 2. Discussion of the Prior Art

In this instance, laser scanning devices in the form of bar code readers are described in detail in U. S. Patent 4,387,297, assigned to the same assignee of the present invention and incorporated by reference herein. Thus, the laser scanning ssytem disclosed in the above-mentioned U. S. Patent 4,387,297 includes a portable hand-held scanning head which may be of any suitable configuration, but preferably has a gun-shaped housing consisting of lightweight plastic, and with a handle and barrel portion of the housing enabled to receive the various components of the scanning head therein. Within the barrel portion there is generally mounted a light source, an optic train including focusing lenses for directing the light beam across a bar code symbol on a target, and sensing means for detecting reflected light from the bar code symbol being scanned.

Other structures for laser scanning devices in the form of bar code readers, in addition to the above-mentioned U. S. Patent, are also described in more specific detail in U. S. Patent Nos. 4,760,248; 4,387,297, 4,409,470 and all of which are assigned to the same assignee as the present invention and incorporated by reference herein.

Moreover, in addition to the above-mentioned structures and devices relating the the scanning reading of information, such as bar code symbols, it is also possible to contemplate that the scanning devices may be mounted on or suspended from a ceiling above a target containing the information which is to be scanned by the scanning device.

Although all of the foregoing devices satisfactorily meet the demands of industry to the extent of their intended applications, it may be advantageous to be able to scan or read a larger amount of data, or in essence, data provided at a high degree of density whereby, for example, a considerable amount of data may be imparted to a given printed symbol or bar code area of compact size, with part of the data being in color variations within the printed symbol so as to be able to be scanned by laser beams of differing wavelengths.

## SUMMARY OF THE INVENTION

Accordingly, the present invention provides for a multi-laser scanning system for the reading of information which is to be scanned by laser beams projected by means of this system, such as the reading of a bar code symbol by a bar code reader, whereby the scanning system includes at least two lasers generating and projecting laser beams of differing wavelengths so as to enable the detection of the color variations in the scanned symbol and derive information therefrom.

In order to accomplish the foregoing, the inventive multi-laser system provides for at least two laser beam generators, preferably a first one emitting a laser beam at a 780 nm wavelength, whereas the second laser beam generator emits a laser beam at a 680 nm wavelength. Both laser beams are directed at a suitable cold mirror or optical filter so as to focus the two converging laser beams into an essentially coaxial beam orientation directed towards a scanning mirror which, in turn, focuses the coaxial laser beams onto a target bearing the information which is to be scanned, such as a (multi-colored) bar code symbol. The reflected laser light from the scanned symbol is then directed back to the scanning mirror, from there to a collection mirror and therefrom to a further cold mirror or optical filter so as to be divided into separate paths of reflected light towards separate laser detectors each correlated with a laser beam wavelength of, respectively, 680 nm and 780 nm. Consequently, the separation of the reflected laser light between the laser detectors receptive to different wavelengths enables the detection and processing of high density data from the scanned symbol on also the basis of detected color variations within the symbol, thereby providing a very high data density information yield heretofore unable to be scanned by existing single laser scanning systems.

Accordingly, it is an object of the present invention to provide a multi-laser scanning system for the reading of information, such as bar code symbols or the like, which is adapted to be scanned by laser beams projected from a plurality of laser generators to enable the scanning of very high data densities contained within the scanned symbol.

Another object of the present invention resides in the provision of a multi-laser scanning system of the type described herein which is adapted to discriminate among various color variations contained within a printed symbol being scanned by laser beams of differing wavelengths so as to enable the obtention and scanning of data at a much higher densities than heretofore possible with the use of only a single-laser generator and detector system.

Still another object of the present invention is to provide a method for the utilization of a multi-laser scanning system of the type described herein in order to be able to scan very high data density bar code symbols or the like.

## BRIEF DESCRIPTION OF THE DRAWINGS

Reference may now be had to the following detailed description of an embodiment of a multi-laser scanning system pursuant to the invention, preferably in the form of a reader for the reading of a bar code symbol, taken in conjunction with the accompanying drawings; in which:

Figure 1 illustrates a schematic representation of a multi-laser system pursuant to the invention;

Figure 2 illustrates a graphical representation of a character of a Code 39 as would be printed by a specially designed printer utilizing the multi-laser scanning system of Fig. 1; and

Figure 3 illustrates, on a reduced scale, a schematic representation of the multi-laser scanning system of Fig. 1 shown housed within a portable, manually- operable, gun-shaped device.

## DETAILED DESCRIPTION

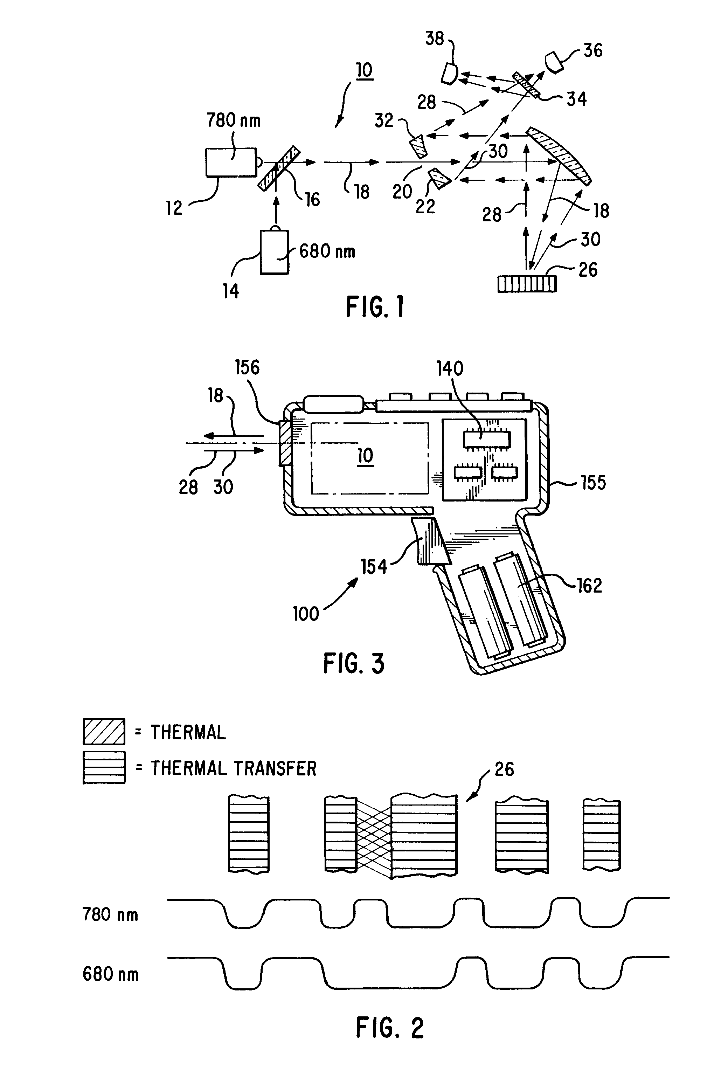

Referring now more specifically to the drawings, and particularly Fig. 1, there is schematically illustrated a multi-laser scanning system 10 which functions pursuant to the inventive concept. The laser scanning system 10, as illustrated includes a first laser beam generator 12 which generates a laser beam having a wavelength of 780 nm, and arranged at an angle relative thereto, is a second beam laser generator 14 which generates a laser beam having a wavelength of 680 nm. The laser beams from the laser generators 12 and 14 are convergingly directed towards a cold mirror 16, the latter of which may be the type of optical filter, and which allows for the unobstructed passage therethrough of the laser beam having a wavelength of 780 nm while diverting the laser beam having the wavelength of 680 nm so as to cause both beams to be coaxially oriented along a common beam path 18. The coaxial laser beam 18 passes through a central aperture 20 provided in a curved collection mirror 22 so as to strike agaisnt the surface of a scanning mirror 24 which, in turn, directs the coaxial laser beam 18 against information 26 which is to be scanned, such as a multi-colored bar code symbol, and facilitates the scanning of the symbol 26.

Reflected laser light from the scanned symbol 26 is conducted along beam paths 28 and 30 back towards the scanning mirror 24, and from the latter reflected against a curved reflector surface 32 on the collection mirror 22. From the curved surface 32, the beams 28 and 30 of reflected light are conducted towards a further cold mirror or optical filter 34 which divides the reflected beams of light 28, 30 so as to allow the portion of the light generated by the laser beam having the wavelength of 780 nm to pass through and impinge against a first laser detector 36, whereas the reflected light from the laser beam having the wavelength of 680 nm is deflected towards a laser detector 38 which is correlated with scanning symbol information at that particular wavelength. Both of the laser detectors 36 and 38 may consists of photodiodes or photosensors, as is well known in the laser technology.

Referring to Figure 2 of the drawings, there is illustrated one character of a Code 39, as would be normally printed with a specially designed printer. This printer could conceivably employ a thermal print head, thermal paper and a thermal transfer ribbon. Consequently, the printer would be able to print on the thermal paper either by directly heating the paper, or by heating the thermal transfer ribbon, which would transfer "ink" from the ribbon to the paper. Irrespective of what is printed, employing the ribbon is visible to both lasers, whereas whatever is printed on the thermal paper without the ribbon is visible only to the laser operating at the wavelength of 680 nm. Furthermore, Fig. 2 illustrates the analog signals which would be produced by the two laser detectors or photosensors 36, 38 if the code 39 character were to be printed with the ribbon, but one space filled in with the thermal paper.

One simple way to encode extra information in this manner would be to use a standard symbology, such as Code 39, but to assign different meanings to the characters depending on which of the spaces is or are filled in. Thus, for example, Code 39 normally has four spaces in each character. Consequently, there are 16 different ways in which these four spaces that can be filled in, and which may permit 16 different meanings to be imparted to each character.

Furthermore, it would also be possible to utilize a new symbology in which the data is encoded in both signals, and which might permit a very short character, one with only few elements for each wavelength, but would still provide for many possible combinations of elements. A printer for this symbology would be very similar to currently existing thermal transfer printers, and may be built in a manner currently employed in the manufacture of thermal transfer printers.

A further manner in which the printer symbology could be used would be; for example, to employ a color ink jet, a dot matrix, or laser printer. Utilizing black ink for one color and blue ink which is invisible to the infrared laser for the other color would also be contemplateable within the scope of the invention.

Reverting to the generally diagrammatic representation of Fig. 3 of the drawings, this illustrates, on a reduced scale and in a simplified manner, a physical application of the multi-laser scanning system shown in Fig. 1, incorporated in a hand-held gun-shaped reader which is preferably utilized for the scanning of a bar code symbol.

In this instance, the scanning system components which are analogous with or similar to those shown in Fig. 1 are identified by the same reference numerals. In this embodiment, the multi-laser scanning system 10 incorporates a reader unit 100 in the configuration of a gun-shaped device, having a pistol grip type handle 153 and a movable trigger 154 employed to permit a user to generate the coaxial laser beams 18 by activating the detector circuitry (as shown in Fig. 1) when pointed at the symbol 26 which is to be read, such as a bar code symbol, thereby saving battery life in the event that the unit is self-powered. The gun-shaped device includes a light-weight plastic housing 155 containing the laser light sources 12 and 14, the laser detectors 36 and 38, the optics and signal processing circuitry, the CPU 140 as well as the power source consisting of battery 162. A light-transmissive window 156 in the front end of the housing 155 allows the outgoing coaxial laser beams 18 to exit and the incoming reflected beams of light 28, 30 to enter the unit 100. The reader 100 is designed to be aimed by the user at a bar code symbol 26 from a position in which the reader 100 is spaced from the symbol; in effect, not touching the symbol. Typically, this type of hand-held bar code reader is specified to operate in the range of perhaps several inches from the symbol.

Alternatively, as mentioned hereinbefore, the multi-laser scanning system may be incorporated into a ceiling-mounted or suspended arrangement above a suitable surface or platform supporting a target, possibly a package or the like, incorporating the information thereon, such as in the nature of a bar code symbol.

Although the multi-laser scanning system and method has been described in particularity with regard to the reading of a bar code symbol, naturally the symbol may be of a different type, rather than linear or single line bar codes, but may be applicable to more complex scanning patterns, and to two-dimensional bar codes such as Code 49 and similar symbologies. Moreover, instead of the gun-shaped reader 100, the laser scanning arrangement may be, for example, for a rosette scanner, a crown scanner or a slot scanner, in which the internal laser beam generating components are identical with those illustrated in Fig. 1, and primarily the focusing optics for generating the laser beam 18 differ as shown herein through the provision of the above-mentioned scanner types.

While there has been shown and described what are considered to be preferred embodiments of the invention, it will of course be understood that various modifications and changes in form or detail could readily be made without departing from the spirit of the invention. It is therefore intended that the invention be not limited to the exact form and detail herein shown and described, nor to anything less than the whole of the invention herein disclosed as hereinafter claimed.

## Claims

1. A multi-laser scanning system for the reading of information which is to be scanned by laser beams projected from said system; comprising:

   (a) first means for generating a laser beam of a specific wavelength;

   (b) at least one further means for generating a laser beam of a wavelength differing from the wavelength of said first-mentioned laser beam;

   (c) means for orienting said laser beams generated by said beam generating means into coaxially directed laser beams;

(d) scanning mirror means directing said coaxial laser beams against said information which is to be scanned by said beams and receiving light reflected from said scanned information;

(e) collection mirror means for receiving said reflected light from said scanning mirror means;

(f) a plurality of laser detectors, said collection mirror means reflecting said reflected light towards said laser detectors;

(g) and means interposed in the path of said reflected light intermediate said scanning mirror means and said laser detectors for dividing said reflected light into separate beams each conducted towards respectively one said laser detector operatively associated with the wavelength of the laser beam from respectively one said laser beam generating means.

2. A multi-laser scanning system as claimed in Claim 1, wherein said laser beam orienting means comprises an optical filter facilitating passage therethrough of the laser beam from one said laser beam generating means and deflecting the laser beam from the other said beam generating means.

3. A multi-laser scanning system as claimed in Claim 1, wherein said light dividing means intermediate said scanning mirror means and said laser detectors comprises an optical filter facilitating passage therethrough of the portion of reflected light from the laser beam of one said laser beam generating means and deflecting the portion of reflected light from the laser beam of the other said laser beam generating means.

4. A multi-laser scanning system as claimed in Claim 1, wherein each said laser detector comprises a photosensor.

5. A multi-laser scanning system as claimed in Claim 1, wherein each said laser detector comprises a photodiode.

6. A multi-laser scanning system as claimed in Claim 1, wherein the laser beam generated by said first laser beam generating means has a wavelength of 780 nm and the laser beam generated by said at least one further laser beam generating means has a wavelength of 680 nm.

7. A multi-laser scanning system as claimed in Claim 1, wherein said system comprises a bar code reader for scanning bar code symbols.

8. A multi-laser scanning system as claimed in Claim 1, wherein said laser beam orienting means consists of a cold mirror.

9. A multi-laser scanning ssytem as claimed in Claim 1, wherein said light-dividing means consists of a cold mirror.

10. Method for the reading of information which is to be scanned by laser beams projected from a multi-laser scanning system; comprising:

(a) generating a laser beam of a specific wavelength;

(b) generating a further laser beam of a wavelength differing from the wavelength of said first-mentioned laser beam;

(c) orienting said laser beams into coaxially directed laser beams;

(d) directing said coaxial laser beams agaisnt said information which is to be scanned by said beams and receiving light reflected from said scanned information;

(e) reflecting said reflected light towards a plurality of laser detectors;

(f) and reflected light intermediate said scanning mirror means and dividing said reflected light into separate beams conducted towards respectively one said laser detector operatively associated with a laser beam of a different wavelength.

11. A method as claimed in Claim 11, wherein one said laser beam has a wavelength of 780 nm and the further laser beam has a wavelength of 680 nm.

12. A method as claimed in Claim 10, comprising scanning bar code symbols.

FIG. 1

FIG. 3

= THERMAL

= THERMAL TRANSFER

780 nm

680 nm

FIG. 2